# EUROPEAN PATENT SPECIFICATION

(11) **EP 3 061 215 B1**
(45) Date of publication and mention of the grant of the patent: **04.04.2018**
(21) Application number: 15729644.3
(22) Date of filing: 28.05.2015
(51) Int. Cl.: H04L 12/58

(54) **CONDITIONAL DELIVERY OF ELECTRONIC MESSAGES**
KONDITIONALE LIEFERUNG VON ELEKTRONISCHEN NACHRICHTEN
DISTRIBUTION CONDITIONNELLE DE MESSAGES ÉLECTRONIQUES

(30) Priority: 14.01.2015 US 201514596857
(43) Date of publication of application: 31.08.2016
(73) Proprietor: LinkedIn Corporation, Mountain View, California 94043 (US)
(72) Inventor: LEE, Alexandre J., Mountain View, California 94043 (US); YUAN, Lawrence, Mountain View, California 94043 (US)
(74) Representative: D Young & Co LLP
(86) International application number: PCT/US2015/032916
(87) International publication number: WO 2016/114809

(56) References cited:
- WO-A2-2008/008811

## Description

### BACKGROUND

This disclosure relates to the field of computer systems. More particularly, a system, apparatus, and methods are provided for conditionally forwarding electronic mail to a secondary address.

Many online applications provide electronic mail services to their users, using addresses associated with the application. Some of these applications only allow users to access messages sent to these addresses within the application environment. That is, they must connect to and use the application in order to open the messages.

Some other applications that are aware of users' electronic mail addresses outside of the application environment forward every message they receive at the application-associated addresses to the other addresses. This practice doubles the amount of messages the users must manage and necessarily causes a great deal of duplication.

WO 2008/008811 A2 discloses a method and system of message handling can include tagging a message with an expiration period that is designated for delivery to a recipient via a server, deleting the message from the server after the expiration period if no third party recipient is designated or if the message is a lower priority message, and delivering the message after the expiration period to a third party if a third party recipient is designated. The method can further include sending a notification to a sender that the expiration period has been reached if the message has not been sent and optionally offering an option to the sender to either delete the message from the server or to resend it with a new or no expiration period.

### DESCRIPTION OF THE FIGURES

Figure 1 is a block diagram depicting a system for conditionally forwarding electronic messages, in accordance with some embodiments.
Figure 2 is a flow chart illustrating a method of conditionally forwarding electronic messages, in accordance with some embodiments.
Figure 3 is a flow chart illustrating a method of conditionally forwarding electronic messages, in accordance with some embodiments.
Figure 4 is a block diagram depicting an apparatus for conditionally forwarding electronic messages, in accordance with some embodiments.

### DETAILED DESCRIPTION

The following description is presented to enable any person skilled in the art to make and use the disclosed embodiments, and is provided in the context of one or more particular applications and their requirements. Various modifications to the disclosed embodiments will be readily apparent to those skilled in the art, and the general principles defined herein may be applied to other embodiments and applications without departing from the scope of those that are disclosed. Thus, the present invention or inventions are not intended to be limited to the embodiments shown, but rather are to be accorded the widest scope consistent with the disclosure.

In some embodiments, a system, apparatus, and methods are provided for conditionally forwarding electronic mail (email) and/or other types of electronic messages. In these embodiments, the messages are received at an online application or service, via addresses allocated to users of the application (or service) that are within a domain (e.g., a network domain, an Internet domain) associated with the application. These addresses may be termed "internal" addresses.

A message received for a user at his or her internal address is conditionally forwarded or copied to an "external" address of the user, which is an address in a domain other than that of the online application. In some embodiments, a user's external electronic mail address may be his or her login name or account identifier with the application. For example, new users may register with the application or service by providing their external email addresses and setting up an account under that identity.

In some embodiments, instead of simply forwarding to a user's external address every message received at the user's internal address, or a notification of every message, the online application waits for a threshold period of time after receipt (or after some processing of the message) and before forwarding the message. If the user accesses the original message via the online application within that period of time, the message may not be automatically forwarded to the external address. Thus, in some implementations, a given message is forwarded only if it remains unread after a threshold period of time.

In some embodiments, if the user receives additional messages at his or her internal address, while the threshold period of time from a first message is still tolling, some or all of the additional messages may also be forwarded to the user's external address after the period of time expires. In this scenario, the message(s) may be forwarded soon after expiration of the threshold period of time measured from receipt of the first message, after expiration of the threshold period of time measured from receipt of the last message, or at some other time.

In some illustrative implementations, messages are threaded and, when an unread message received at an internal address is to be conditionally forwarded to an external address, some or all unread messages in the same thread that are between the last read message and most recently received message are sent at the same time. When multiple messages are forwarded to an external address, they may be sent as individual messages or some (or all) may be sent in digest form. If a relatively large number of messages is to be sent (e.g., more than 5, more than 10), a subset of the messages may be sent in digest form (e.g., 5, 10), along with a link that the recipient may activate to access the remaining messages (e.g., within the online application).

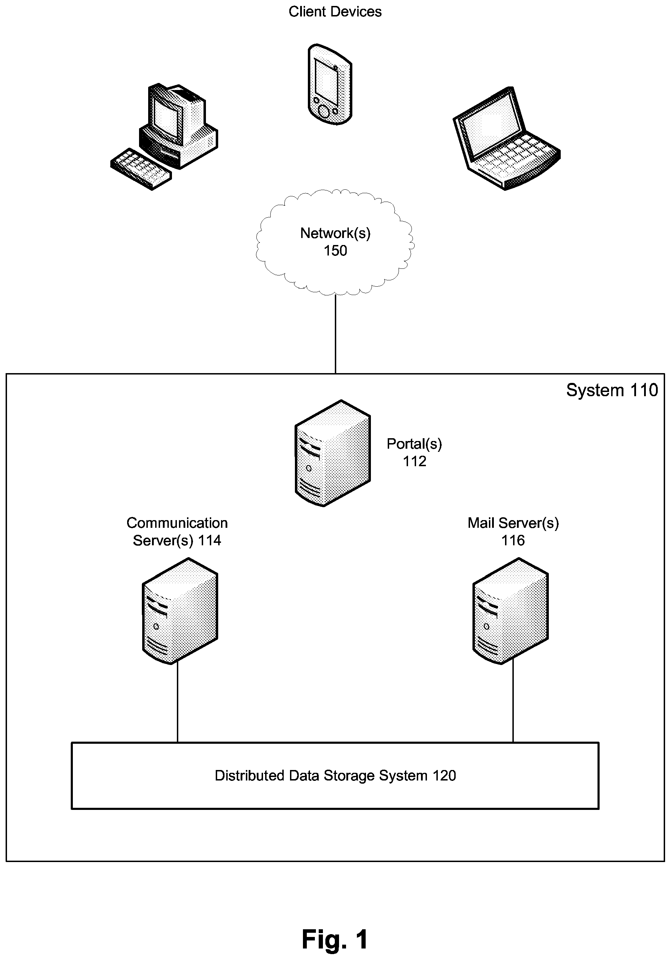

Figure 1 is a block diagram depicting a system for conditionally forwarding electronic messages, according to some embodiments.

System 110 of Figure 1 may be part of a data center that supports or hosts an online application or service. Users of system 110 may be termed members because they may be required to register with the system in order to use the application (or service). In some embodiments, system 110 is part of a system that hosts or supports a professional or social networking service, such as that provided by LinkedIn® Corporation.

Users of the system are provided internal addresses within a network domain (e.g., an Internet domain) of the system or a service provided by the system. For example, each user may be assigned an electronic mail address, username, instant messaging handle, or other identifier within a domain that corresponds to the system. Thus, if the system is associated with a particular URL (Uniform Resource Locator) having a unique domain name, users may be assigned internal addresses within that same domain. These addresses may be provided to other users and/or entities external to the system.

In some embodiments, users identify to the system at least one external address (e.g., email address) within a domain other than that of the system (e.g., as part of the process of registering and opening an account). These external addresses may be used as user/account identifiers when a user logs in.

System 110 is coupled to client devices operated by users via one or more networks 150, which may include the Internet, intranets, and/or other networks, and may incorporate wired and/or wireless communication links. User connections are terminated at one or more portals 112; separate portals may be implemented for different types of client devices or connections (e.g., mobile, web).

Communication server(s) 114 receive incoming messages addressed to the internal addresses of users of system 110, in the form of electronic mail, instant messages, and/or others. Messages received at users' internal addresses may have been generated within a service or application offered by the system (e.g., by other users) and/or by external applications. Each message received for delivery to a user via his or her internal address may be placed into a message queue or event queue, or otherwise stored for further processing and conditional forwarding or delivery to an external address.

Mail server(s) 116 receive messages addressed to users' internal addresses, directly from communication server(s) 114 or via some other entity, such as a communication pipeline, an event queue, etc. Each mail server 116 stores received messages for the intended recipients (e.g., in storage system 120), maintains one or more queues to support conditional forwarding of the messages, manages time to determine when to forward a message, determines whether to forward a particular message, and dispatches messages toward users' external addresses when such action is warranted.

Distributed data storage system 120 is a storage system for storing users' messages, user profiles, other content generated by users and/or selected for delivery to users, data for graphing users' connections with each other, and so on. Data storage system 120 may include various databases, tables, and/or other data structures for storing messages for access by users within the system's applications/services and for supporting the conditional delivery of the messages to external addresses.

One condition that may determine whether to forward a particular message to a user's external address is time. In particular, a given message received at the user's internal address may be forwarded after a threshold period of time elapses (e.g., 5 minutes, 10 minutes, 30 minutes, 1 hour). To monitor time periods for different messages, separate timers may be instantiated or some other mechanism may be used. For example, a built-in Java® pool executor object (e.g., ScheduledThreadPoolExecutor) may be configured to take action after the threshold period of time passes since a message was received, added to a user's inbox, or queued for conditional forwarding. Separate executors may be instantiated for each message or for each active message thread.

Another condition that may determine whether to forward a particular message is its status - in particular, whether or not it was read within the environment of an application or service provided by the system. For example, a message may be removed from a message queue that stores messages for conditional forwarding, or from some other storage location, after it is read. In some implementations, when a scheduled pool executor object associated with a message processes the message after expiration of the threshold period of time, the message's status is checked and, if it has been read, the message is not forwarded to the user's external address.

Another condition is the status of a message's thread. In some embodiments, a separate thread is created for each conversation in which a user is engaged. Each thread may be associated with a separate set of correspondents (e.g., the user and the originator of a message to the user), separate title or subject, and/or other parameters. When a time threshold associated with a current message expires, a decision whether to forward it to the user's external address may depend on whether any additional messages have been received within the same thread, whether any message in the thread received after the current message has been read, how frequently messages within the thread are being received, how recently a thread message was read, and/or other factors.

Yet another condition that may affect a decision as to whether (e.g., and when) to forward a message is the identity of the user to whom it is addressed. In some embodiments, different time thresholds may apply to different users, to different types of messages (e.g., as determined by media type, format, message content), at different times of day, and so on. For example, a time threshold may be longer during late night or early morning than during working hours. Thus, time thresholds applied to a given user's messages may be dynamic and be affected by time of day, the user's behavior (e.g., how regularly the user connects to the system), rate of message delivery, and/or other factors.

A message addressed to multiple users' internal addresses may be separately processed for each, to apply each user's corresponding time threshold (if different), or a single time threshold may be applied. The decision whether to forward the message to each user's external address will still also depend on whether that user has or has not already read the message within the application/service environment, and therefore may be forwarded to some recipient(s) but not others.

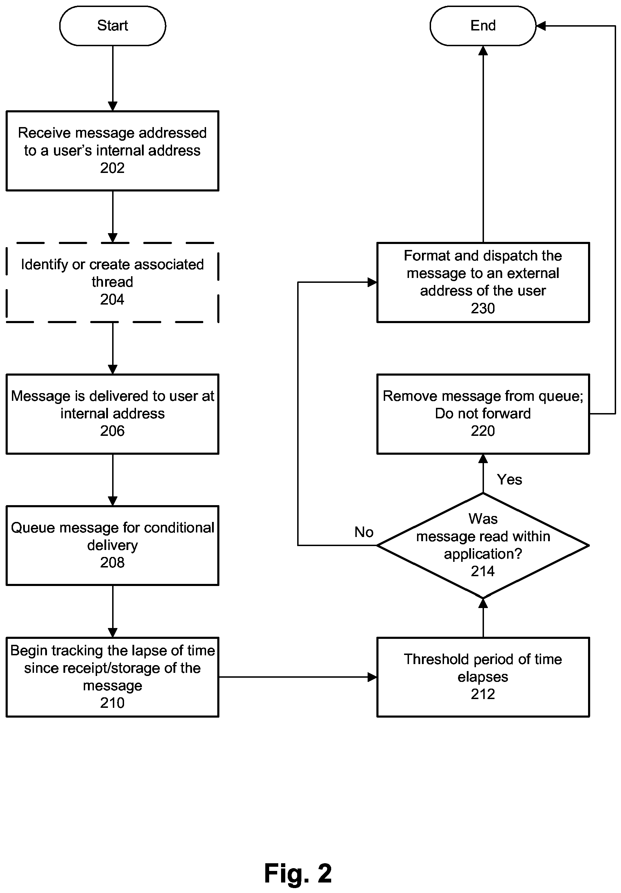

Figure 2 is a flow chart illustrating a method of conditionally forwarding electronic messages, according to some embodiments.

In operation 202, a message is received that is addressed to an internal address of a user of a system that hosts or supports an online application (or service). For example, the message may be an electronic mail message that was sent to an electronic mail address of the user within the domain of the system. In other implementations, a different type of message may be received.

The message may be received at a communication server, a portal, or other component of the system. Depending on the system configuration, the message may be transferred immediately to another system component (e.g., a mail server), or may be placed in a queue, an event pipeline, or some other structure, from which it will be retrieved for further processing.

In optional operation 204, a mail server or other component of the system receives the message and either associates it with an existing communication thread or assigns it a new thread. In some embodiments, a unique thread is created for each conversation that includes the user and that features a unique set of correspondents. Thus, if the current message was received from someone with whom the user previously corresponded, a thread may already exist to track messages between these parties, and the message will be assigned a new sequence number in that thread. Conversely, if this is the first message received from the sender or originator, a new thread may be created, with a new thread identifier to identify the thread, and the message may receive an initial sequence number (e.g., zero or one).

In some embodiments, the system (e.g., a mail server) keeps track of every thread of every user, by assigning new sequence numbers to new messages and by noting which messages have (or have not) been read by the user while connected to the system. Threads may expire after some period of inactivity, or may be permanent or semi-permanent. Thread identifiers may be unique among some or all users, or a user's thread identities may follow the same sequence or series of thread identifiers.

Each active thread's status may be recorded in a table or other data structure, and may include data such as the thread's identifier, the identity (e.g., internal address) of a user associated with the thread, the sequence number of the most recent message received (or sent) for the thread, the statuses of some or all messages in the thread (e.g., to identify the most recent message that has been read by the user), etc. If two or more users are part of one thread, separate thread statuses may be kept for each user, or one status may be maintained for all of them.

In operation 206, the mail server makes the new/current message available to the user via his or her internal address. For example, the message may be added to a mailbox or other repository that contains messages and/or other content for access by the user. This repository may be maintained on a data storage system that is accessible by users and by various system components. For example, the message may be stored in a database or other structure, and a link to the message may be added to the user's inbox within a message utility offered by the application.

Also, in some embodiments, a notification may be pushed to the user via an electronic device, to alert him or her regarding receipt of the new message. This notification may be addressed to the external address at which the user receives conditionally forwarded messages from the system, at a telephone number, at some other address, or via some other mechanism.

In operation 208, the mail server adds the message to a queue that stores users' messages for conditional delivery to the users' external addresses. A separate queue may exist for each user or one queue may be used for some or all users' messages. Messages may be removed from the queue when they are read, when they are forwarded, and/or at some other time. Within the queue, a message may be represented by a message identifier, by a thread identifier and a sequence number that identifies the message within the thread, and/or by other metadata. In some embodiments, a message queue may be a lightweight queue constructed solely in memory.

In operation 210, the mail server or some other system component starts a timer associated with the message, notes the time at which the message was processed in some way (e.g., received by the system, placed in the destination user's internal inbox, queued for conditional forwarding), or takes some other action to track the age of the message. For example, the time at which some action described herein was taken may be stored with the message's entry in the message queue that holds messages for conditional forwarding.

In some embodiments, a program object configured to take action after passage of a specified period of time is instantiated at an appropriate time - such as after the message is added to a user's inbox - or in conjunction with some related action. As described below, after the passage of the specified time period, the object may execute to determine whether conditions associated with the message have been satisfied and, if so, will begin the process of forwarding the message.

In operation 212, a threshold period of time has elapsed since operation 210, the length of which may differ from one embodiment to another. Some embodiments may use time periods that are relatively short (e.g., 5 minutes, 10 minutes); others may use time periods that are relatively long (e.g., 30 minutes, 45 minutes, 1 hour). As discussed above, different time thresholds may be applied for different users and/or different messages, and a threshold applied for a given user may be dynamic so as to vary from one message (or one type of message) to another, from one day or time of day to another, etc.

In some illustrative embodiments, a dynamic time threshold may change based on a recipient's (or addressee's) propensity to open or otherwise interact with messages (e.g., based on historic click rates), the (average) amount of time that passes before a recipient opens/interacts with messages, a reputation score or importance of the recipient (e.g., as indicated among professional profile data maintained by LinkedIn Corporation), or some other attribute or characteristic of the recipient (e.g., title, seniority, functional area).

Also, or instead, a dynamic time threshold may depend upon the message or its content. For example, messages sent with high urgency may have different time thresholds than messages sent with normal priority. As other examples, messages that are work-related may have different time thresholds than messages associated with job opportunities (e.g., from a recruiter).

Thus, in some embodiments various scores or values may be calculated or assigned for any/all of these factors, and/or others, and then aggregated to generate a final score for a given message. A suitable time threshold may then be set and applied based on that final score.

In operation 214, the system determines whether the message has been read by the user. This determination may involve checking a storage location of the message, a status of the message's thread, and/or the message's entry in the message queue, any or all of which may be updated when the message is read, and/or some other action may be involved. If the user read the message, the illustrated method proceeds to operation 220; otherwise, the method advances to operation 230.

In some implementations, a message may be automatically removed from the queue when it is read via the application. In this case, operation 214 may include determining whether the message is still in the queue. In some alternative implementations, when a message is read further processing automatically occurs to stop measuring the passage of time since it was received. For example, a program object responsible for this may terminate, may be deleted, or may be reclaimed. This same object may be responsible for conditionally initiating forwarding of the message after the corresponding period of time elapses, in which case canceling or terminating the object prevents the message from being forwarded.

In operation 220, the system updates its data as necessary (e.g., a message status and/or thread status) to indicate that the message has not been forwarded to the user's external address. The method then ends or returns to another operation to receive a new message or take other action.

In operation 230, the system (e.g., the mail server) forwards the message to an external address (e.g., an external electronic mail address) of the user, and updates its data to reflect this action. For example, the system may format or re-format the message, or at least its contents, to generate a new SMTP (Simple Mail Transport Protocol) communication and dispatch it toward the external address.

In other embodiments, other types of messages are received and forwarded, and/or a message received in one format may be forwarded in another. For example, a chat message received for a user could be formatted and forwarded according to XMPP (Extensible Messaging and Presence Protocol) or some other chat protocol or instant messaging protocol (e.g., SMS or Short Message Service), an electronic mail message could be forwarded as a chat message (or vice versa), etc.

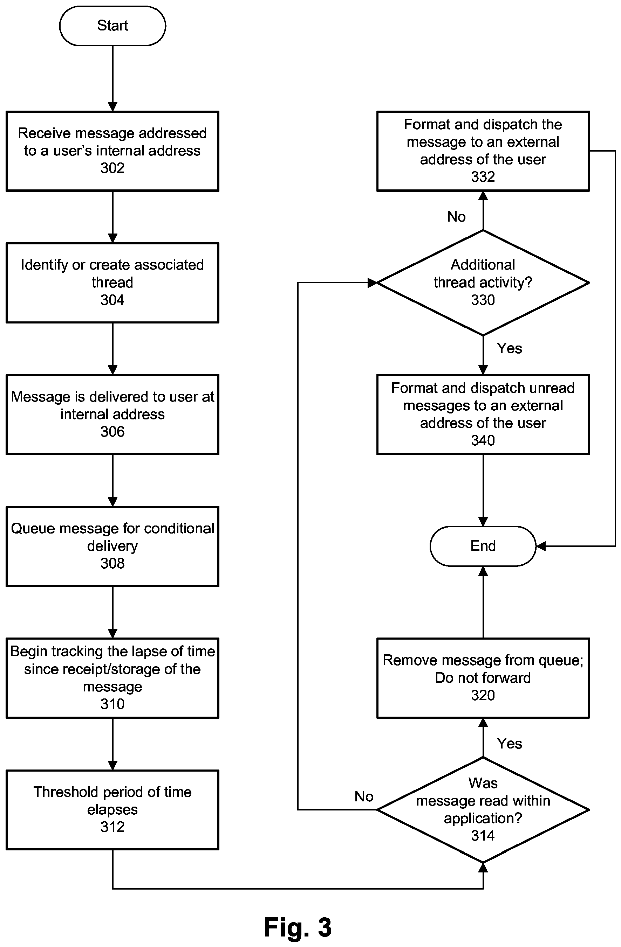

Figure 3 is a flow chart illustrating a method of conditionally forwarding electronic messages, according to some embodiments. In these embodiments, more than one message may be forwarded at a time. In particular, when it is time to forward one message (e.g., because its corresponding threshold period of time has lapsed), one or more additional messages may also be dispatched.

In operation 302, a message is received that is addressed to an internal address of a user of a system that hosts or supports an application (or service), such as system 110 of Figure 1.

In operation 304, a mail server or other component of the system receives the message and either associates it with an existing communication thread or assigns it a new thread. Thus, if the current message was received from someone with whom the user previously corresponded or from whom a previous message was received, a thread may already exist to track messages between these parties and the message will be assigned a new sequence number in that thread. Conversely, if this is the first message received from the sender or originator, a new thread may be created, with a new thread identifier to identify the thread, and the message may receive an initial sequence number (e.g., zero or one).

In operation 306, the mail server makes the new/current message available to the user via his or her internal address. For example, the message may be added to a mailbox or other repository that contains messages and/or other content for access by the user. Also, in some embodiments, a notification may be pushed to a device operated by the user to alert him or her regarding receipt of the new message.

In operation 308, the mail server adds the message to a queue that stores users' messages for conditional forwarding/delivery to the users' external addresses. A separate queue may exist for each user, or one queue may be used for some or all users' messages.

In operation 310, the mail server or some other system component starts a timer associated with the message, notes the time of delivery (or storage or queueing) of the message, or otherwise enables tracking or measurement of the passage of time after receipt or queueing of the message. In some implementations, a program code object is instantiated to track the passage of a threshold period of time, such as a Java® thread pool executor class of object, and to perform additional processing (described below) after that period of time passes.

In operation 312, the threshold period of time has elapsed since the message was received or queued, the duration of which may differ from one embodiment to another. Some embodiments may use threshold time periods that are relatively short (e.g., 5 minutes, 10 minutes); others may use threshold time periods that are relatively long (e.g., 30 minutes, 45 minutes, 1 hour). As discussed above, different time thresholds may be applied for different users and/or different messages, and a threshold applied for a given user may be dynamic so as to vary from one message (or one type of message) to another, from one day or time of day to another, etc.

In operation 314, the system determines whether the message has been read by the user. This determination may involve checking a storage location of the message, a status of the message's thread, and/or the message's entry in the message queue, any or all of which may be updated when the message is read, and/or some other action may be involved. If the user read the message, the illustrated method proceeds to operation 320; otherwise, the method advances to operation 330.

In operation 320, the message is removed from queue and the system may or may not update relevant data (e.g., a message status and/or thread status) to indicate that the message has not been forwarded to the user's external address. The method then ends or returns to another operation to receive a new message or take other action.

In operation 330, the system (e.g., the mail server) determines whether there has been additional activity within the message thread that comprises this message, since the current message was queued. In particular, the system determines whether any additional messages have been received. This determination may be made by examining the thread's status to find the sequence number of the most recent message in the thread, and comparing that with the sequence number of this message. If there has been no further activity, the method continues at operation 332; otherwise, the method advances to operation 340.

In operation 332, the system (e.g., the mail server) forwards the message to an external address (e.g., an external electronic mail address) of the user, and updates its data to reflect this action. For example, the system may format or re-format the message, or at least its contents, to generate a new SMTP (Simple Mail Transport Protocol) communication and dispatch it toward the external address. After operation 332 the method ends or returns to a previous operation (e.g., to receive/process another message).

In operation 340, the system identifies some or all messages in the current message's thread that have not been read, and forwards them to the user's external address. Any timers or other objects that are still executing to track time since those messages were received or queued may be terminated, deleted, or reclaimed, and the messages may be removed from their queue(s). After operation 340 the method ends or returns to a previous operation (e.g., to receive/process another message).

In some embodiments, instead of immediately forwarding unread messages (e.g., in operation 340), the system may wait for an additional period of time. This may allow yet more messages to be received and forwarded.

For example, the system may identify the most recently received message that is unread, and wait for its associated threshold period of time to lapse. Then it may either forward unread messages (if there are any), or wait even longer. In some implementations, however, there may be a maximum period of time that the system will hold an unread message before forwarding it (either alone or with other unread messages), such as 15 minutes, 30 minutes, 1 hour, or longer.

When the system aggregates or coalesces multiple messages for forwarding, they may be moved to a different queue from the one in which they were initially queued for conditional forwarding. Thus, when a first time period for a first message expires, and there are multiple unread messages within the same thread, some or all of them may be moved to a separate queue. Additional messages in the thread may be added if they are received before the separately queued messages are forwarded. At some future time, the unread messages are dispatched to the destination user's external address, in their original form, in digest form, partially in original form and partially in digest form, etc.

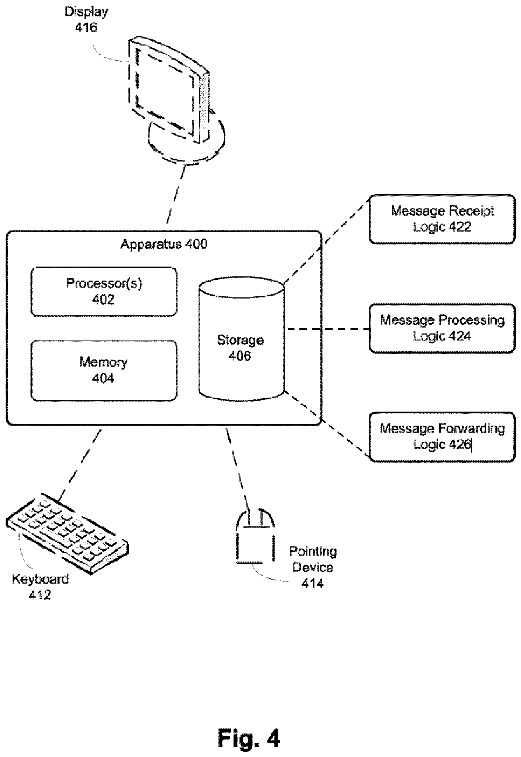

Figure 4 is a block diagram depicting an apparatus for conditionally forwarding electronic messages, according to some embodiments. In these embodiments, the apparatus operates as part of, or in cooperation with, a system that hosts an online application or service and that provides system users with internal addresses at which they may receive electronic mail, instant messages, and/or other types of messages. The users also have external addresses, which may be used as account names or login identifiers

Apparatus 400 of Figure 4 includes processor(s) or CPU(s) 402, memory 404, and storage 406, which may comprise one or more optical, solid-state, and/or magnetic storage components. Storage 406 may be local or remote to the apparatus. Apparatus 400 can be coupled (permanently or temporarily) to keyboard 412, pointing device 414, and display 416.

Storage 406 stores logic that may be loaded into memory 404 for execution by processor(s) 402. Such logic includes message receipt logic 422, message processing logic 424, and message forwarding logic 426. In other embodiments, these logic modules may be combined or divided to aggregate or separate their functionality as desired.

Message receipt logic 422 comprises processor-executable instructions for receiving a message addressed to a user's internal address and for initial handling and/or storage of the message to make it available for further processing in order to forward it to an external address of the user, subject to one or more conditions as described above.

Message processing logic 424 comprises processor-executable instructions for further processing of a message, to make it available to a user (if logic 422 did not take such action), to start tracking the passage of time since receipt or storage of the message, to queue it for conditional forwarding, to determine whether conditions necessary to forward the message have been satisfied, and/or take other action.

Message forwarding logic 426 comprises processor-executable instructions for formatting and forwarding a message if the applicable condition(s) were satisfied. One or more messages may be dispatched at a time and may be formatted according to any suitable message protocol (e.g., SMTP). A message that is forwarded may be forwarded in substantially the same form it was received, may be sent in digest form, or may be sent in some other form. For example, a collection of multiple messages may be formatted into a single transmission that includes the contents of one or more messages (in original or digest form) and that includes a link the recipient may activate or select to navigate to a page of the application or service that will allow the recipient to see the rest of the messages.

An environment in which one or more embodiments described above are executed may incorporate a general-purpose computer or a special-purpose device such as a hand-held computer or communication device. Some details of such devices (e.g., processor, memory, data storage, display) may be omitted for the sake of clarity. A component such as a processor or memory to which one or more tasks or functions are attributed may be a general component temporarily configured to perform the specified task or function, or may be a specific component manufactured to perform the task or function. The term "processor" as used herein refers to one or more electronic circuits, devices, chips, processing cores and/or other components configured to process data and/or computer program code.

Data structures and program code described in this detailed description are typically stored on a non-transitory computer-readable storage medium, which may be any device or medium that can store code and/or data for use by a computer system. Non-transitory computer-readable storage media include, but are not limited to, volatile memory; non-volatile memory; electrical, magnetic, and optical storage devices such as disk drives, magnetic tape, CDs (compact discs) and DVDs (digital versatile discs or digital video discs), solid-state drives, and/or other non-transitory computer-readable media now known or later developed.

Methods and processes described in the detailed description can be embodied as code and/or data, which may be stored in a non-transitory computer-readable storage medium as described above. When a processor or computer system reads and executes the code and manipulates the data stored on the medium, the processor or computer system performs the methods and processes embodied as code and data structures and stored within the medium.

Furthermore, the methods and processes may be programmed into hardware modules such as, but not limited to, application-specific integrated circuit (ASIC) chips, field-programmable gate arrays (FPGAs), and other programmable-logic devices now known or hereafter developed. When such a hardware module is activated, it performs the methods and processed included within the module.

The foregoing embodiments have been presented for purposes of illustration and description only. They are not intended to be exhaustive or to limit this disclosure to the forms disclosed. Accordingly, many modifications and variations will be apparent to practitioners skilled in the art. The scope is defined by the appended claims, not the preceding disclosure.

## Claims

1. A method of conditionally forwarding an electronic message, the method comprising:
at an online service that provides internal addresses for users of the online service within a network domain of the online service:
receiving (302) a first message addressed to a first internal address of a first user of the online service;
queueing (308) the first message in a first queue, for conditional forwarding to a first external address by which the first user is known to the online service; and
after a first threshold period of time elapses since said queueing:
determining (310) whether the first message was read by the first user within the online service; and
upon determining that the first message was not read by the first user (314) within the online service, forwarding the first message (332) to the first external address;
wherein the first external address is within a network domain other than the network domain of the online service; and
wherein the first threshold period of time is dynamically determined for each user.

2. The method of claim 1, further comprising:
receiving an additional message addressed to the first internal address after the first message and before the first threshold period of time elapses;
wherein forwarding the first message comprises:
determining whether the additional message was read by the first user within the online service; and
upon determining that the additional message was not read by the first user within the online service, forwarding the first message and the additional message to the first external address.

3. The method of claim 1, further comprising:
receiving an additional message addressed to the first internal address after the first message and before the first threshold period of time elapses;
wherein forwarding the first message comprises, after a second threshold period of time elapses since the additional message is queued in the first queue:
determining whether the additional message was read by the first user within the online service; and
upon determining that the additional message was not read by the first user within the online service, forwarding the first message and the additional message to the first external address.

4. The method of claim 1, further comprising, before the first threshold period of time elapses since receipt of the first message:
receiving at least one additional message addressed to the first internal address;
wherein said forwarding comprises forwarding to the first external address all messages, among the first message and the at least one additional message, that were not read by the first user within the online service.

5. The method of any of claims 2 to 4, wherein the forwarded messages are forwarded in digest form.

6. The method of claim 1, further comprising:
before the first threshold period of time elapses since receipt of the first message, receiving one or more additional messages addressed to the first internal address; and
after the first threshold period of time elapses since receipt of the first message:
moving from the first queue to a second queue all messages, among the first message and the one or more additional messages, that were unread at the time the first threshold period of time elapsed;
wherein said forwarding comprises:
after a second threshold period of time elapses since moving messages from the first queue to the second queue, forwarding to the first external address all messages, among the first message and the one or more additional messages, that were not read by the first user within the online service at the time the second threshold period of time elapsed.

7. The method of claim 1, wherein:
the forwarded first message comprises a link that is selectable by the first user; and
selection of the link navigates the first user to a page of the online service at which the first user may access additional messages other than the first message.

8. An apparatus (400) configured to operate as part of, or in conjunction with, a system that hosts an online service, the apparatus comprising:
a processor (402); and
memory (404) storing instructions that, when executed by the processor, cause the apparatus to:
receive, at the online service that provides internal addresses for users of the online service within a network domain of the online service, a first message addressed to a first internal address of a first user of the online service;
queue the first message in a first queue, for conditional forwarding to a first external address by which the first user is known to the online service; and
after a first threshold period of time elapses since said queueing:
determine whether the first message was read by the first user within the online service; and
upon determining that the first message was not read by the first user within the online service, forward the first message to the first external address;
wherein the first external address is within a network domain other than the network domain of the online service; and
wherein the first threshold period of time is dynamically determined for each user.

9. The apparatus (400) of claim 8, wherein the memory (404) further stores instructions that, when executed by the processor (402), cause the apparatus (400) to:
receive an additional message addressed to the first internal address after the first message and before the first threshold period of time elapses;
wherein forwarding the first message comprises:
determining whether the additional message was read by the first user within the online service; and
upon determining that the additional message was not read by the first user within the online service, forwarding the first message and the additional message to the first external address.

10. The apparatus (400) of claim 8, wherein the memory (404) further stores instructions that, when executed by the processor (402), cause the apparatus (400) to:
receive an additional message addressed to the first internal address after the first message and before the first threshold period of time elapses;
wherein forwarding the first message comprises, after a second threshold period of time elapses since the additional message is queued in the first queue:
determining whether the additional message was read by the first user within the online service; and
upon determining that the additional message was not read by the first user within the online service, forwarding the first message and the additional message to the first external address.

11. The apparatus (400) of claim 8, wherein the memory (404) further stores instructions that, when executed by the processor (402), cause the apparatus (400) to, before the first threshold period of time elapses since receipt of the first message:
receive at least one additional message addressed to the first internal address;
wherein said forwarding comprises forwarding to the first external address all messages, among the first message and the at least one additional message, that were not read by the first user within the online service.

12. The apparatus (400) of any of claims 9 to 11, wherein the forwarded messages are forwarded in digest form.

13. The apparatus (400) of claim 8, wherein the memory (404) further stores instructions that, when executed by the processor (402), cause the apparatus to:
before the first threshold period of time elapses since receipt of the first message, receive one or more additional messages addressed to the first internal address; and
after the first threshold period of time elapses since receipt of the first message:
move from the first queue to a second queue all messages, among the first message and the one or more additional messages, that were unread at the time the first threshold period of time elapsed;
wherein said forwarding comprises:
after a second threshold period of time elapses since moving messages from the first queue to the second queue, forwarding to the first external address all messages, among the first message and the one or more additional messages, that were not read by the first user within the online service at the time the second threshold period of time elapsed.

14. The apparatus (400) of claim 8, wherein:
the forwarded first message comprises a link that is selectable by the first user; and
selection of the link navigates the first user to a page of the online service at which the first user may access additional messages other than the first message.

15. A system for hosting an on-line service, the system comprising:
a message receipt module (422) comprising a computer readable medium (406) storing instructions that, when executed, cause the system to receive, at an online service that provides internal addresses for users of the online service within a network domain of the online service, a first message addressed to a first internal address of a first user of the online service;
a message processing module (424) comprising a computer readable medium storing instructions that, when executed, cause the system to:
queue the first message in a first queue, for conditional forwarding to a first external address by which the first user is known to the online service; and
after a first threshold period of time elapses since said queueing, determine whether the first message was read by the first user within the online service;
wherein the first external address is within a network domain other than the network domain of the online service; and
wherein the first threshold period of time is dynamically determined for each user; and
a message forwarding module (426) comprising a computer readable medium storing instructions that, when executed, cause the system to, upon determining that the first message was not read by the first user within the online service, forward the first message to the first external address.

16. The system of claim 15, wherein:
the computer readable medium (406) of the message receipt module (422) further comprises instructions that, when executed, cause the system to receive an additional message addressed to the first internal address after the first message and before the first threshold period of time elapses; and
forwarding the first message comprises:
determining whether the additional message was read by the first user within the online service; and
upon determining that the additional message was not read by the first user within the online service, forwarding the first message and the additional message to the first external address.

17. The system of claim 15, wherein:
the computer readable medium (406) of the message receipt module (422) further comprises instructions that, when executed, cause the system to receive an additional message addressed to the first internal address after the first message and before the first threshold period of time elapses; and
forwarding the first message comprises, after a second threshold period of time elapses since the additional message is queued in the first queue:
determining whether the additional message was read by the first user within the online service; and
upon determining that the additional message was not read by the first user within the online service, forwarding the first message and the additional message to the first external address.

18. The system of claim 15, wherein:
the computer readable medium (406) of the message receipt module (422) further comprises instructions that, when executed, cause the system to receive at least one additional message addressed to the first internal address before the first threshold period of time elapses since receipt of the first message; and
said forwarding comprises forwarding to the first external address all messages, among the first message and the at least one additional message, that were not read by the first user within the online service.

19. The system of claim 15, wherein:
the computer readable medium (406) of the message receipt module (422) further comprises instructions that, when executed, cause the system to receive one or more additional messages addressed to the first internal address before the first threshold period of time elapses since receipt of the first message;
the computer readable medium (406) of the message processing module (422) further comprises instructions that, when executed, cause the system to, after the first threshold period of time elapses since receipt of the first message:
move from the first queue to a second queue all messages, among the first message and the one or more additional messages, that were unread at the time the first threshold period of time elapsed; and
said forwarding comprises:
after a second threshold period of time elapses since moving messages from the first queue to the second queue, forwarding to the first external address all messages, among the first message and the one or more additional messages, that were not read by the first user within the online service at the time the second threshold period of time elapsed.

20. The system of claim 15, wherein:
the forwarded first message comprises a link that is selectable by the first user; and
selection of the link is adapted to navigate the first user to a page of the online service at which the first user may access additional messages other than the first message.

## Patentansprüche

1. Verfahren zum konditionalen Weiterleiten einer elektronischen Nachricht, das Verfahren umfassend:
an einem Online-Dienst, der interne Adressen für Benutzer des Online-Dienstes innerhalb einer Netzwerkdomäne des Online-Dienstes bereitstellt:
Empfangen (302) einer ersten Nachricht, adressiert an eine erste interne Adresse eines ersten Benutzers des Online-Dienstes;
Einreihen (308) der ersten Nachricht in eine erste Warteschlange zum konditionalen Weiterleiten an eine erste externe Adresse, durch die der erste Benutzer dem Online-Dienst bekannt ist; und
nach Verstreichen einer ersten Schwellenwert-Zeitperiode seit dem Einreihen:
Bestimmen (310), ob die erste Nachricht durch den ersten Benutzer innerhalb des Online-Dienstes gelesen wurde; und
nach Bestimmen, dass die erste Nachricht durch den ersten Benutzer (314) innerhalb des Online-Dienstes nicht gelesen wurde, Weiterleiten der ersten Nachricht (332) an die erste externe Adresse;
wobei die erste externe Adresse innerhalb einer anderen Netzwerkdomäne als die Netzwerkdomäne des Online-Dienstes ist; und
wobei die erste Schwellenwert-Zeitperiode für jeden Benutzer dynamisch bestimmt wird.

2. Verfahren nach Anspruch 1, ferner umfassend:
Empfangen einer zusätzlichen Nachricht, adressiert an die erste interne Adresse, nach der ersten Nachricht und bevor die erste Schwellenwert-Zeitperiode verstreicht;
wobei Weiterleiten der ersten Nachricht umfasst:
Bestimmen, ob die zusätzliche Nachricht durch den ersten Benutzer innerhalb des Online-Dienstes gelesen wurde; und
nach Bestimmen, dass die zusätzliche Nachricht durch den ersten Benutzer innerhalb des Online-Dienstes nicht gelesen wurde, Weiterleiten der ersten Nachricht und der zusätzlichen Nachricht an die erste externe Adresse.

3. Verfahren nach Anspruch 1, ferner umfassend:
Empfangen einer zusätzlichen Nachricht, adressiert an die erste interne Adresse, nach der ersten Nachricht und bevor die erste Schwellenwert-Zeitperiode verstreicht;
wobei Weiterleiten der ersten Nachricht umfasst, nachdem eine zweite Schwellenwert-Zeitperiode seit dem Einreihen der zusätzlichen Nachricht in die erste Warteschlange verstreicht:
Bestimmen, ob die zusätzliche Nachricht durch den ersten Benutzer innerhalb des Online-Dienstes gelesen wurde; und
nach Bestimmen, dass die zusätzliche Nachricht durch den ersten Benutzer innerhalb des Online-Dienstes nicht gelesen wurde, Weiterleiten der ersten Nachricht und der zusätzlichen Nachricht an die erste externe Adresse.

4. Verfahren nach Anspruch 1, ferner umfassend, bevor die erste Schwellenwert-Zeitperiode seit Empfang der ersten Nachricht verstreicht:
Empfangen mindestens einer zusätzlichen Nachricht, adressiert an die erste interne Adresse;
wobei das Weiterleiten umfasst, alle Nachrichten unter der ersten Nachricht und der mindestens einen zusätzlichen Nachricht, die durch den ersten Benutzer innerhalb des Online-Dienstes nicht gelesen wurden, an die erste externe Adresse weiterzuleiten.

5. Verfahren nach einem der Ansprüche 2 bis 4, wobei die weitergeleiteten Nachrichten in einer Form einer Zusammenfassung weitergeleitet werden.

6. Verfahren nach Anspruch 1, ferner umfassend:
bevor die erste Schwellenwert-Zeitperiode seit Empfang der ersten Nachricht verstreicht, Empfangen einer oder mehrerer zusätzlicher Nachrichten, adressiert an die erste interne Adresse; und
nachdem die erste Schwellenwert-Zeitperiode seit Empfang der ersten Nachricht verstreicht:
Verlagern, aus der ersten Warteschlange in eine zweite Warteschlange, aller Nachrichten unter der ersten Nachricht und der einen oder den mehreren zusätzlichen Nachrichten, die zur Zeit des Verstreichens der ersten Schwellenwert-Zeitperiode ungelesen waren;
wobei das Weiterleiten umfasst:
nachdem eine zweite Schwellenwert-Zeitperiode seit Verlagern von Nachrichten aus der ersten Warteschlange in die zweite Warteschlange verstreicht, Weiterleiten, an die erste externe Adresse, aller Nachrichten unter der ersten Nachricht und der einen oder den mehreren zusätzlichen Nachrichten, die durch den ersten Benutzer innerhalb des Online-Dienstes zur Zeit des Verstreichens der zweiten Schwellenwert-Zeitperiode nicht gelesen wurden.

7. Verfahren nach Anspruch 1, wobei:
die weitergeleitete erste Nachricht eine Verknüpfung umfasst, die durch den ersten Benutzer auswählbar ist; und
eine Auswahl der Verknüpfung den ersten Benutzer zu einer Seite des Online-Dienstes navigiert, auf der der erste Benutzer auf zusätzliche Nachrichten außer der ersten Nachricht zugreifen kann.

8. Vorrichtung (400), konfiguriert zum Betriebenwerden als Teil eines Systems oder in Verbindung mit einem System, das einen Online-Dienst beherbergt, die Vorrichtung umfassend:
einen Prozessor (402); und
Speicher (404), der Anweisungen speichert, die, wenn sie durch den Prozessor ausgeführt werden, bewirken, dass die Vorrichtung Folgendes ausführt:
Empfangen, an dem Online-Dienst, der interne Adressen für Benutzer des Online-Dienstes innerhalb einer Netzwerkdomäne des Online-Dienstes bereitstellt, einer ersten Nachricht, adressiert an eine erste interne Adresse eines ersten Benutzers des Online-Dienstes;
Einreihen der ersten Nachricht in eine erste Warteschlange zum konditionalen Weiterleiten an eine erste externe Adresse, durch die der erste Benutzer dem Online-Dienst bekannt ist; und
nach Verstreichen einer ersten Schwellenwert-Zeitperiode seit dem Einreihen:
Bestimmen, ob die erste Nachricht durch den ersten Benutzer innerhalb des Online-Dienstes gelesen wurde; und
nach Bestimmen, dass die erste Nachricht durch den ersten Benutzer innerhalb des Online-Dienstes nicht gelesen wurde, Weiterleiten der ersten Nachricht an die erste externe Adresse;
wobei die erste externe Adresse innerhalb einer anderen Netzwerkdomäne als die Netzwerkdomäne des Online-Dienstes ist; und
wobei die erste Schwellenwert-Zeitperiode für jeden Benutzer dynamisch bestimmt wird.

9. Vorrichtung (400) nach Anspruch 8, wobei der Speicher (404) ferner Anweisungen speichert, die, wenn sie durch den Prozessor (402) ausgeführt werden, bewirken, dass die Vorrichtung (400) Folgendes ausführt:
Empfangen einer zusätzlichen Nachricht, adressiert an die erste interne Adresse, nach der ersten Nachricht und bevor die erste Schwellenwert-Zeitperiode verstreicht;
wobei Weiterleiten der ersten Nachricht umfasst:
Bestimmen, ob die zusätzliche Nachricht durch den ersten Benutzer innerhalb des Online-Dienstes gelesen wurde; und
nach Bestimmen, dass die zusätzliche Nachricht durch den ersten Benutzer innerhalb des Online-Dienstes nicht gelesen wurde, Weiterleiten der ersten Nachricht und der zusätzlichen Nachricht an die erste externe Adresse.

10. Vorrichtung (400) nach Anspruch 8, wobei der Speicher (404) ferner Anweisungen speichert, die, wenn sie durch den Prozessor (402) ausgeführt werden, bewirken, dass die Vorrichtung (400) Folgendes ausführt:
Empfangen einer zusätzlichen Nachricht, adressiert an die erste interne Adresse, nach der ersten Nachricht und bevor die erste Schwellenwert-Zeitperiode verstreicht;
wobei Weiterleiten der ersten Nachricht umfasst, nachdem eine zweite Schwellenwert-Zeitperiode seit dem Einreihen der zusätzlichen Nachricht in die erste Warteschlange verstreicht:
Bestimmen, ob die zusätzliche Nachricht durch den ersten Benutzer innerhalb des Online-Dienstes gelesen wurde; und
nach Bestimmen, dass die zusätzliche Nachricht durch den ersten Benutzer innerhalb des Online-Dienstes nicht gelesen wurde, Weiterleiten der ersten Nachricht und der zusätzlichen Nachricht an die erste externe Adresse.

11. Vorrichtung (400) nach Anspruch 8, wobei der Speicher (404) ferner Anweisungen speichert, die, wenn sie durch den Prozessor (402) ausgeführt werden, bewirken, dass die Vorrichtung (400) Folgendes ausführt, bevor die erste Schwellenwert-Zeitperiode seit Empfang der ersten Nachricht verstreicht:
Empfangen mindestens einer zusätzlichen Nachricht, adressiert an die erste interne Adresse;
wobei das Weiterleiten umfasst, alle Nachrichten unter der ersten Nachricht und der mindestens einen zusätzlichen Nachricht, die durch den ersten Benutzer innerhalb des Online-Dienstes nicht gelesen wurden, an die erste externe Adresse weiterzuleiten.

12. Vorrichtung (400) nach einem der Ansprüche 9 bis 11, wobei die weitergeleiteten Nachrichten in einer Form einer Zusammenfassung weitergeleitet werden.

13. Vorrichtung (400) nach Anspruch 8, wobei der Speicher (404) ferner Anweisungen speichert, die, wenn sie durch den Prozessor (402) ausgeführt werden, bewirken, dass die Vorrichtung Folgendes ausführt:
bevor die erste Schwellenwert-Zeitperiode seit Empfang der ersten Nachricht verstreicht, Empfangen einer oder mehrerer zusätzlicher Nachrichten, adressiert an die erste interne Adresse; und
nachdem die erste Schwellenwert-Zeitperiode seit Empfang der ersten Nachricht verstreicht:
Verlagern, aus der ersten Warteschlange in eine zweite Warteschlange, aller Nachrichten unter der ersten Nachricht und der einen oder den mehreren zusätzlichen Nachrichten, die zur Zeit des Verstreichens der ersten Schwellenwert-Zeitperiode ungelesen waren;
wobei das Weiterleiten umfasst:
nachdem eine zweite Schwellenwert-Zeitperiode seit Verlagern von Nachrichten aus der ersten Warteschlange in die zweite Warteschlange verstreicht, Weiterleiten, an die erste externe Adresse, aller Nachrichten unter der ersten Nachricht und der einen oder den mehreren zusätzlichen Nachrichten, die durch den ersten Benutzer innerhalb des Online-Dienstes zur Zeit des Verstreichens der zweiten Schwellenwert-Zeitperiode nicht gelesen wurden.

14. Vorrichtung (400) nach Anspruch 8, wobei:
die weitergeleitete erste Nachricht eine Verknüpfung umfasst, die durch den ersten Benutzer auswählbar ist; und
eine Auswahl der Verknüpfung den ersten Benutzer zu einer Seite des Online-Dienstes navigiert, auf der der erste Benutzer auf zusätzliche Nachrichten außer der ersten Nachricht zugreifen kann.

15. System zum Beherbergen eines Online-Dienstes, das System umfassend:
ein Nachrichtenempfangsmodul (422), umfassend ein computerlesbares Medium (406), das Anweisungen speichert, die, wenn sie ausgeführt werden, bewirken, dass das System an einem Online-Dienst, der interne Adressen für Benutzer des Online-Dienstes innerhalb einer Netzwerkdomäne des Online-Dienstes bereitstellt, eine erste Nachricht empfängt, adressiert an eine erste interne Adresse eines ersten Benutzers des Online-Dienstes;
ein Nachrichtenverarbeitungsmodul (424), umfassend ein computerlesbares Medium, das Anweisungen speichert, die, wenn sie ausgeführt werden, bewirken, dass das System Folgendes ausführt:
Einreihen der ersten Nachricht in eine erste Warteschlange zum konditionalen Weiterleiten an eine erste externe Adresse, durch die der erste Benutzer dem Online-Dienst bekannt ist; und
nach Verstreichen einer ersten Schwellenwert-Zeitperiode seit dem Einreihen, Bestimmen, ob die erste Nachricht durch den ersten Benutzer innerhalb des Online-Dienstes gelesen wurde;
wobei die erste externe Adresse innerhalb einer anderen Netzwerkdomäne als die Netzwerkdomäne des Online-Dienstes ist; und
wobei die erste Schwellenwert-Zeitperiode für jeden Benutzer dynamisch bestimmt wird; und
ein Nachrichtenweiterleitungsmodul (426), umfassend ein computerlesbares Medium, das Anweisungen speichert, die, wenn sie ausgeführt werden, bewirken, dass das System nach Bestimmen, dass die erste Nachricht durch den ersten Benutzer innerhalb des Online-Dienstes nicht gelesen wurde, die erste Nachricht an die erste externe Adresse weiterleitet.

16. System nach Anspruch 15, wobei:
das computerlesbare Medium (406) des Nachrichtenempfangsmoduls (422) ferner Anweisungen umfasst, die, wenn sie ausgeführt werden, bewirken, dass das System eine zusätzliche Nachricht empfängt, adressiert an die erste interne Adresse, nach der ersten Nachricht und bevor die erste Schwellenwert-Zeitperiode verstreicht; und
Weiterleiten der ersten Nachricht umfasst:
Bestimmen, ob die zusätzliche Nachricht durch den ersten Benutzer innerhalb des Online-Dienstes gelesen wurde; und
nach Bestimmen, dass die zusätzliche Nachricht durch den ersten Benutzer innerhalb des Online-Dienstes nicht gelesen wurde, Weiterleiten der ersten Nachricht und der zusätzlichen Nachricht an die erste externe Adresse.

17. System nach Anspruch 15, wobei:
das computerlesbare Medium (406) des Nachrichtenempfangsmoduls (422) ferner Anweisungen umfasst, die, wenn sie ausgeführt werden, bewirken, dass das System eine zusätzliche Nachricht empfängt, adressiert an die erste interne Adresse, nach der ersten Nachricht und bevor die erste Schwellenwert-Zeitperiode verstreicht; und
Weiterleiten der ersten Nachricht umfasst, nachdem eine zweite Schwellenwert-Zeitperiode seit dem Einreihen der zusätzlichen Nachricht in die erste Warteschlange verstreicht:
Bestimmen, ob die zusätzliche Nachricht durch den ersten Benutzer innerhalb des Online-Dienstes gelesen wurde; und
nach Bestimmen, dass die zusätzliche Nachricht durch den ersten Benutzer innerhalb des Online-Dienstes nicht gelesen wurde, Weiterleiten der ersten Nachricht und der zusätzlichen Nachricht an die erste externe Adresse.

18. System nach Anspruch 15, wobei:
das computerlesbare Medium (406) des Nachrichtenempfangsmoduls (422) ferner Anweisungen umfasst, die, wenn sie ausgeführt werden, bewirken, dass das System mindestens eine zusätzliche Nachricht empfängt, adressiert an die erste interne Adresse, bevor die erste Schwellenwert-Zeitperiode seit Empfang der ersten Nachricht verstreicht; und
das Weiterleiten umfasst, alle Nachrichten unter der ersten Nachricht und der mindestens einen zusätzlichen Nachricht, die durch den ersten Benutzer innerhalb des Online-Dienstes nicht gelesen wurden, an die erste externe Adresse weiterzuleiten.

19. System nach Anspruch 15, wobei:
das computerlesbare Medium (406) des Nachrichtenempfangsmoduls (422) ferner Anweisungen umfasst, die, wenn sie ausgeführt werden, bewirken, dass das System, bevor die erste Schwellenwert-Zeitperiode seit Empfang der ersten Nachricht verstreicht, eine oder mehrere zusätzliche Nachrichten empfängt, adressiert an die erste interne Adresse;
das computerlesbare Medium (406) des Nachrichtenverarbeitungsmoduls (422) ferner Anweisungen umfasst, die, wenn sie ausgeführt werden, bewirken, dass das System, nachdem die erste Schwellenwert-Zeitperiode seit Empfang der ersten Nachricht verstreicht, Folgendes ausführt:
Verlagern, aus der ersten Warteschlange in eine zweite Warteschlange, aller Nachrichten unter der ersten Nachricht und der einen oder den mehreren zusätzlichen Nachrichten, die zur Zeit des Verstreichens der ersten Schwellenwert-Zeitperiode ungelesen waren; und
wobei das Weiterleiten umfasst:
nachdem eine zweite Schwellenwert-Zeitperiode seit Verlagern von Nachrichten aus der ersten Warteschlange in die zweite Warteschlange verstreicht, Weiterleiten, an die erste externe Adresse, aller Nachrichten unter der ersten Nachricht und der einen oder den mehreren zusätzlichen Nachrichten, die durch den ersten Benutzer innerhalb des Online-Dienstes zur Zeit des Verstreichens der zweiten Schwellenwert-Zeitperiode nicht gelesen wurden.

20. System nach Anspruch 15, wobei:
die weitergeleitete erste Nachricht eine Verknüpfung umfasst, die durch den ersten Benutzer auswählbar ist; und
eine Auswahl der Verknüpfung angepasst ist, den ersten Benutzer zu einer Seite des Online-Dienstes zu navigieren, auf der der erste Benutzer auf zusätzliche Nachrichten außer der ersten Nachricht zugreifen kann.

## Revendications

1. Procédé de renvoi conditionnel d'un message électronique, le procédé comprenant les étapes suivantes :
au niveau d'un service en ligne qui fournit des adresses internes pour des utilisateurs du service en ligne au sein d'un domaine réseau du service en ligne :
réception (302) d'un premier message adressé à une première adresse interne d'un premier utilisateur du service en ligne ;
mise en file d'attente (308) du premier message dans une première file d'attente en vue de son renvoi conditionnel à une première adresse externe par laquelle le premier utilisateur est connu du service en ligne ; et
après qu'un premier intervalle de temps seuil s'est écoulé depuis ladite mise en file d'attente :
détermination (310) si le premier message a été lu ou pas par le premier utilisateur au sein du service en ligne ; et
s'il est déterminé que le premier message n'a pas été lu par le premier utilisateur (314) au sein du service en ligne, renvoi du premier message (332) à la première adresse externe ;
la première adresse externe appartenant à un domaine réseau autre que le domaine réseau du service en ligne ; et
le premier intervalle de temps seuil étant déterminé dynamiquement pour chaque utilisateur.

2. Procédé selon la revendication 1, comprenant en outre les étapes suivantes :
réception d'un message additionnel adressé à la première adresse interne après le premier message et avant que le premier intervalle de temps seuil ne se soit écoulé ;
l'étape de renvoi du premier message comprenant les étapes suivantes :
détermination si le message additionnel a été lu ou pas par le premier utilisateur au sein du service en ligne ; et
s'il est déterminé que le message additionnel n'a pas été lu par le premier utilisateur au sein du service en ligne, renvoi du premier message et du message additionnel à la première adresse externe.

3. Procédé selon la revendication 1, comprenant en outre l'étape suivante :
réception d'un message additionnel adressé à la première adresse interne après le premier message et avant que le premier intervalle de temps seuil ne se soit écoulé ;
l'étape de renvoi du premier message comprenant, après qu'un deuxième intervalle de temps seuil s'est écoulé depuis la mise en file d'attente du message additionnel dans la première file d'attente :
détermination si le message additionnel a été lu ou pas par le premier utilisateur au sein du service en ligne ; et
s'il est déterminé que le message additionnel n'a pas été lu par le premier utilisateur au sein du service en ligne, renvoi du premier message et du message additionnel à la première adresse externe.

4. Procédé selon la revendication 1, comprenant en outre, avant que le premier intervalle de temps seuil ne se soit écoulé depuis la réception du premier message, l'étape suivante :
réception d'au moins un message additionnel adressé à la première adresse interne ;
ladite étape de renvoi comprenant l'étape de renvoi à la première adresse externe de tous les messages, parmi le premier message et l'au moins un message additionnel, qui n'ont pas été lus par le premier utilisateur au sein du service en ligne.

5. Procédé selon l'une quelconque des revendications 2 à 4, dans lequel les messages renvoyés sont renvoyés sous forme de condensé.

6. Procédé selon la revendication 1, comprenant en outre les étapes suivantes :
avant que le premier intervalle de temps seuil ne se soit écoulé depuis la réception du premier message, réception d'un ou de plusieurs messages additionnels adressés à la première adresse interne ; et
après que le premier intervalle de temps seuil s'est écoulé depuis la réception du premier message :
transfert depuis la première file d'attente vers une deuxième file d'attente de tous les messages, parmi le premier message et le ou les messages additionnels, qui n'ont pas été lus au moment où le premier intervalle de temps seuil s'est écoulé ;
ladite étape de renvoi comprenant l'étape suivante :
après qu'un deuxième intervalle de temps seuil s'est écoulé depuis le transfert de messages depuis la première file d'attente vers la deuxième file d'attente, renvoi à la première adresse externe de tous les messages, parmi le premier message et le ou les messages additionnels, qui n'ont pas été lus par le premier utilisateur au sein du service en ligne au moment où le deuxième intervalle de temps seuil s'est écoulé.

7. Procédé selon la revendication 1, dans lequel :
le premier message renvoyé comprend un lien sélectionnable par le premier utilisateur ; et
la sélection du lien fait naviguer le premier utilisateur vers une page du service en ligne à laquelle le premier utilisateur a la possibilité d'accéder à des messages additionnels autres que le premier message.

8. Appareil (400) configuré pour fonctionner dans le cadre d'un système hébergeant un service en ligne, ou en conjonction avec lui, l'appareil comprenant :
un processeur (402) ; et
une mémoire (404) stockant des instructions qui, une fois exécutées par le processeur, amènent l'appareil à :
recevoir, au niveau du service en ligne qui fournit des adresses internes pour des utilisateurs du service en ligne au sein d'un domaine réseau du service en ligne, un premier message adressé à une première adresse interne d'un premier utilisateur du service en ligne ;
mettre en file d'attente le premier message dans une première file d'attente en vue de son renvoi conditionnel à une première adresse externe par laquelle le premier utilisateur est connu du service en ligne ; et
après qu'un premier intervalle de temps seuil s'est écoulé depuis ladite mise en file d'attente :
déterminer si le premier message a été lu ou pas par le premier utilisateur au sein du service en ligne ; et
s'il est déterminé que le premier message n'a pas été lu par le premier utilisateur au sein du service en ligne, renvoyer le premier message à la première adresse externe ;
la première adresse externe appartenant à un domaine réseau autre que le domaine réseau du service en ligne ; et
le premier intervalle de temps seuil étant déterminé dynamiquement pour chaque utilisateur.

9. Appareil (400) selon la revendication 8, dans lequel la mémoire (404) stocke en outre des instructions qui, une fois exécutées par le processeur (402), amènent l'appareil (400) à :
recevoir un message additionnel adressé à la première adresse interne après le premier message et avant que le premier intervalle de temps seuil ne se soit écoulé ;
le renvoi du premier message comprenant :
la détermination si le message additionnel a été lu ou pas par le premier utilisateur au sein du service en ligne ; et
s'il est déterminé que le message additionnel n'a pas été lu par le premier utilisateur au sein du service en ligne, le renvoi du premier message et du message additionnel à la première adresse externe.

10. Appareil (400) selon la revendication 8, dans lequel la mémoire (404) stocke en outre des instructions qui, une fois exécutées par le processeur (402), amènent l'appareil (400) à :
recevoir un message additionnel adressé à la première adresse interne après le premier message et avant que le premier intervalle de temps seuil ne se soit écoulé ;
le renvoi du premier message comprenant, après qu'un deuxième intervalle de temps seuil s'est écoulé depuis la mise en file d'attente du message additionnel dans la première file d'attente :
la détermination si le message additionnel a été lu ou pas par le premier utilisateur au sein du service en ligne ; et
s'il est déterminé que le message additionnel n'a pas été lu par le premier utilisateur au sein du service en ligne, le renvoi du premier message et du message additionnel à la première adresse externe.

11. Appareil (400) selon la revendication 8, dans lequel la mémoire (404) stocke en outre des instructions qui, une fois exécutées par le processeur (402), amènent l'appareil (400), avant que le premier intervalle de temps seuil ne se soit écoulé depuis la réception du premier message, à :
recevoir au moins un message additionnel adressé à la première adresse interne ;
ledit renvoi comprenant le renvoi à la première adresse externe de tous les messages, parmi le premier message et l'au moins un message additionnel, qui n'ont pas été lus par le premier utilisateur au sein du service en ligne.

12. Appareil (400) selon l'une quelconque des revendications 9 à 11, dans lequel les messages renvoyés sont renvoyés sous forme de condensé.

13. Appareil (400) selon la revendication 8, dans lequel la mémoire (404) stocke en outre des instructions qui, une fois exécutées par le processeur (402), amènent l'appareil à :
avant que le premier intervalle de temps seuil ne se soit écoulé depuis la réception du premier message, recevoir un ou plusieurs messages additionnels adressés à la première adresse interne ; et
après que le premier intervalle de temps seuil s'est écoulé depuis la réception du premier message :
transférer depuis la première file d'attente vers une deuxième file d'attente tous les messages, parmi le premier message et le ou les messages additionnels, qui n'ont pas été lus au moment où le premier intervalle de temps seuil s'est écoulé ;
ledit renvoi comprenant :
après qu'un deuxième intervalle de temps seuil s'est écoulé depuis le transfert de messages depuis la première file d'attente vers la deuxième file d'attente, le renvoi à la première adresse externe de tous les messages, parmi le premier message et le ou les messages additionnels, qui n'ont pas été lus par le premier utilisateur au sein du service en ligne au moment où le deuxième intervalle de temps seuil s'est écoulé.

14. Appareil (400) selon la revendication 8, dans lequel :
le premier message renvoyé comprend un lien sélectionnable par le premier utilisateur ; et
la sélection du lien fait naviguer le premier utilisateur vers une page du service en ligne à laquelle le premier utilisateur a la possibilité d'accéder à des messages additionnels autres que le premier message.

15. Système destiné à héberger un service en ligne, le système comprenant :
un module de réception de message (422) comprenant un support lisible par ordinateur (406) stockant des instructions qui, une fois exécutées, amènent le système à recevoir, au niveau du service en ligne qui fournit des adresses internes pour des utilisateurs du service en ligne au sein d'un domaine réseau du service en ligne, un premier message adressé à une première adresse interne d'un premier utilisateur du service en ligne ;
un module de traitement de message (424) comprenant un support lisible par ordinateur stockant des instructions qui, une fois exécutées, amènent le système à :
mettre en file d'attente le premier message dans une première file d'attente en vue de son renvoi conditionnel à une première adresse externe par laquelle le premier utilisateur est connu du service en ligne ; et
après qu'un premier intervalle de temps seuil s'est écoulé depuis ladite mise en file d'attente, déterminer si le premier message a été lu ou pas par le premier utilisateur au sein du service en ligne ;
la première adresse externe appartenant à un domaine réseau autre que le domaine réseau du service en ligne ; et
le premier intervalle de temps seuil étant déterminé dynamiquement pour chaque utilisateur ; et
un module de renvoi de message (426) comprenant un support lisible par ordinateur stockant des instructions qui, une fois exécutées, amènent le système, s'il est déterminé que le premier message n'a pas été lu par le premier utilisateur au sein du service en ligne, à renvoyer le premier message à la première adresse externe.

16. Système selon la revendication 15, dans lequel :
le support lisible par ordinateur (406) du module de réception de message (422) comprend en outre des instructions qui, une fois exécutées, amènent le système à recevoir un message additionnel adressé à la première adresse interne après le premier message et avant que le premier intervalle de temps seuil ne se soit écoulé ; et
le renvoi du premier message comprend :
la détermination si le message additionnel a été lu ou pas par le premier utilisateur au sein du service en ligne ; et
s'il est déterminé que le message additionnel n'a pas été lu par le premier utilisateur au sein du service en ligne, le renvoi du premier message et du message additionnel à la première adresse externe.

17. Système selon la revendication 15, dans lequel :
le support lisible par ordinateur (406) du module de réception de message (422) comprend en outre des instructions qui, une fois exécutées, amènent le système à recevoir un message additionnel adressé à la première adresse interne après le premier message et avant que le premier intervalle de temps seuil ne se soit écoulé ; et
le renvoi du premier message comprend, après qu'un deuxième intervalle de temps seuil s'est écoulé depuis la mise en file d'attente du message additionnel dans la première file d'attente :
la détermination si le message additionnel a été lu ou pas par le premier utilisateur au sein du service en ligne ; et
s'il est déterminé que le message additionnel n'a pas été lu par le premier utilisateur au sein du service en ligne, le renvoi du premier message et du message additionnel à la première adresse externe.

18. Système selon la revendication 15, dans lequel :
le support lisible par ordinateur (406) du module de réception de message (422) comprend en outre des instructions qui, une fois exécutées, amènent le système à recevoir au moins un message additionnel adressé à la première adresse interne avant que le premier intervalle de temps seuil ne se soit écoulé depuis la réception du premier message ; et
ledit renvoi comprend le renvoi à la première adresse externe de tous les messages, parmi le premier message et l'au moins un message additionnel, qui n'ont pas été lus par le premier utilisateur au sein du service en ligne.

19. Système selon la revendication 15, dans lequel :
le support lisible par ordinateur (406) du module de réception de message (422) comprend en outre des instructions qui, une fois exécutées, amènent le système à recevoir un ou plusieurs messages additionnels adressés à la première adresse interne avant que le premier intervalle de temps seuil ne se soit écoulé depuis la réception du premier message ;
le support lisible par ordinateur (406) du module de traitement de message (422) comprend en outre des instructions qui, une fois exécutées, amènent le système, après que le premier intervalle de temps seuil s'est écoulé depuis la réception du premier message, à :
transférer depuis la première file d'attente vers une deuxième file d'attente tous les messages, parmi le premier message et le ou les messages additionnels, qui n'ont pas été lus au moment où le premier intervalle de temps seuil s'est écoulé ; et
ledit renvoi comprend :
après qu'un deuxième intervalle de temps seuil s'est écoulé depuis le transfert de messages depuis la première file d'attente vers la deuxième file d'attente, le renvoi à la première adresse externe de tous les messages, parmi le premier message et le ou les messages additionnels, qui n'ont pas été lus par le premier utilisateur au sein du service en ligne au moment où le deuxième intervalle de temps seuil s'est écoulé.

20. Système selon la revendication 15, dans lequel :
le premier message renvoyé comprend un lien sélectionnable par le premier utilisateur ; et
la sélection du lien est adaptée à faire naviguer le premier utilisateur vers une page du service en ligne à laquelle le premier utilisateur a la possibilité d'accéder à des messages additionnels autres que le premier message.
